(19) Europäisches Patentamt
European Patent Office
Office européen des brevets

(11) **EP 2 196 371 B1**

(12) **EUROPEAN PATENT SPECIFICATION**

(45) Date of publication and mention
of the grant of the patent:
**26.09.2012 Bulletin 2012/39**

(51) Int Cl.:
**B60W 20/00** (2006.01)   **B60K 5/08** (2006.01)
**B60K 5/10** (2006.01)   **B60W 30/18** (2012.01)
**B60W 10/26** (2006.01)   **B60W 10/28** (2006.01)
**B60K 6/46** (2007.10)

(21) Application number: **09178027.0**

(22) Date of filing: **04.12.2009**

(54) **Method and apparatus for adaptive control of an electric vehicle**

Verfahren und Vorrichtung zur adaptiven Steuerung eines elektrischen Fahrzeugs

Procédé et appareil pour la commande adaptative d'un véhicule électrique

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **09.12.2008 IT MI20082166**

(43) Date of publication of application:
**16.06.2010 Bulletin 2010/24**

(73) Proprietor: **C.R.D. Centro Ricerche Ducati Trento
S.r.l.**
**38068 Rovereto (TN) (IT)**

(72) Inventors:
• **Venturoli, Alessandro**
**40132, Bologna (IT)**
• **Marzadro, Christian**
**38068, Rovereto (IT)**

(74) Representative: **Brunacci, Marco et al**
**BRUNACCI & PARTNERS S.r.l.**
**Via Scaglia Est, 19-31**
**41126 Modena (IT)**

(56) References cited:
EP-A1- 1 745 967   WO-A1-00/27662
WO-A1-2005/075235   WO-A2-01/79012
JP-A- 11 341 606   US-A- 5 065 086
US-A1- 2004 065 489

• CUN J P ET AL: "The experience of a UPS
company in advanced battery monitoring"
TELECOMMUNICATIONS ENERGY
CONFERENCE, 1996. INTELEC '96., 18TH
INTERNA TIONAL BOSTON, MA, USA 6-10 OCT.
1996, NEW YORK, NY, USA,IEEE, US, 6 October
1996 (1996-10-06), pages 646-653, XP010204382
DOI: 10.1109/INTLEC.1996.573404

**Description**

BACKGROUND OF THE INVENTION

This invention refers to a method and an apparatus for an adaptive control of an electric vehicle comprising an electric power storage device and one or more auxiliary electric power source devices which may be selectively enabled and disabled on the basis of different operative modes and control criteria, taking into consideration changeable requirements of use of the vehicle. In particular, the invention is directed to a light electrical vehicle, such as for example a "quadricycle" having one or more driving wheels, each provided with an electric control motor suitable to be selectively fed in a controlled manner either by electrical power storage devices and/or by auxiliary power source devices.

The auxiliary power source devices may be in the form of an auxiliary electric power storage device, or in the form of an electric power generator, to selectively change the powering of the vehicle between electric and hybrid operative modes.

The increase in city traffic and the need to substantially reduce the harmful emissions of internal combustion engines used by most vehicles on the road, have led to the development of electric vehicles, particularly of hybrid type, comprising an electric-power storage system, of rechargeable type, and an electric power generating system comprising a motogenerator operatively connectable to the power storage system under the management of a main logic control unit.

Electric vehicles of hybrid type have been developed either to reduce harmful emissions and to provide a greater autonomy of movement, by using two electric power generating systems or devices and an electric power storage device, depending on whether the vehicle is to be driven in areas where any harmful emissions are prohibited or in areas where use of an internal combustion engine is basically permitted.

However, in electric vehicles of hybrid type currently in use, the managing of the electric power storage and generating devices does not allow maximum exploitation of their functional capacity, or allow only limited adaptation to different requirements of use for the vehicle, particularly as far as concerns the control of the electric power generating devices.

In this regard, hybrid vehicles have been developed comprising a motogenerator module, which may be replaced with another module entirely identical to the previous one. Electric vehicles are described, for example, in WO-A-00/27662 and WO-A-01/79012. Other solutions described, for example, in JP-A-11341606, involve use of a power generating system carried on a trailer being pulled by the vehicle. The preamble of claims 1 and 4 is disclosed by this document.

Nevertheless the nature of the drive system design of the vehicle, makes different auxiliary power generator systems not interchangeable due to different requirements in their management by an electrical control unit of the vehicle, and minor possibilities of exploitation of the power capacities of the individual electric power generation modules, due to some difficulties in managing the control and communication data.

From EP-A-1 745 967 it is also known a train comprising an hybrid electrical system for powering the electric motors of a series of independent vehicles each provided with powered driving wheels and a respective electric power generating device; the fore vehicle provided with the driving cab of the train, comprises an electric power storage device and a train control device suitable to actuate the power generation devices of some or all vehicles of the train in different operative conditions, depending on two different threshold values of the current discharged by the power storage device, to make the sum of the currents discharged by the power storing device and the started power generating devices.

No use of more than one power storage devices and no adaptive management policy for the control and exploitation of the power storage and power generating devices is disclosed or suggested.

OBJECTS OF THE INVENTION

The general object of this invention is to provide a method and an apparatus for an adaptive control of an electric vehicle, aimed at avoiding the limits and/or problems inherent in the management and control of powering systems in electric vehicles of previously known type.

Another object of the invention is to provide a method and apparatus for control of an electric vehicle, which allow use of one or more auxiliary electric power source modules comprising at least one auxiliary electric power storage device and/or one or more auxiliary power generating devices of a same or different type, which may be applied and/or removed, and optionally activated and/or deactivated without to perform interventions to change or adapt the management and the communication protocol among the same power devices.

A further object is to provide an electric vehicle of the type indicated above, in which the management of technologically advanced powering solutions, are made possible allowing both easy and rapid adaptation of the vehicle to the use of different electric power sources for example motogeneration devices suitable for use of different types of fuel, and for potential future propulsion systems, comprising for example supercapacitors and fuel cells, or other innovative power devices to obtain optimisation and maximum exploitation of their efficiency.

Another object of the invention is to provide a method and an apparatus for an adaptive control of an electric vehicle, by which it is possible to identify and detect the efficiency of the electric power sources of the vehicle, enabling them at a required time, or disabling any inoperative power module which does not conforms to the driving requirements of the vehicle.

Other advantages of the invention consequent on modularity and use of the power generating and storage devices and CAN bus communication protocol are, briefly, the following:

flexibility in manufacturing, due to the possibility of conducting separate tests on an electric or hybrid vehicle;
economy of scale deriving from the reduction in costs, due to the possibility of providing purely electric vehicles, which subsequently may be equipped with an hybrid power generation device;
easy maintenance of the power modules in special overhaul centres, with the possibility of replacing the module being overhauled with another identical or of different type, without preventing use of the vehicle;
possibility to update the powering of the vehicle with more advanced propulsion and/or power storage devices; and search for an optimal powering solution on the basis of the environmental and local regulations in which the vehicle must move.

BRIEF DESCRIPTION OF THE INVENTION

The above is made possible, on an electric vehicle, by an adaptive control method according to claim 1, and by an adaptive control apparatus according to claim 4.

According to a first aspect of the invention, a method for an adaptive control of an electric vehicle in which the vehicle comprises:

- at least one driving wheel connected to an electric motor;
- a main control module comprising a main electric power storage device operatively connectable to the electric motor, and a first logic control unit suitable for a selective control of different operative modes of the vehicle; and
- at least one auxiliary power module operatively connectable to the electric motor and to the main power storage device, characterised by:

providing said auxiliary power module with at least one auxiliary power source selected from auxiliary power storage devices and auxiliary power generating devices, and a second control unit connected to the first control unit by a CAN bus communication line;
- said first and second control units being conformed and programmed to receive and transmit control data through said CAN bus communication line for:

- detecting by the first control unit a state of residual energy of the main power storage device;
- detecting, at a time, by the second control unit data of the auxiliary power source, comprising the followings:

Cm (Wh) = residual energy capacity of the auxiliary power source;
Am (Wh) = maximum energy absorption, at the starting, of the auxiliary power source;
Em (%) = actual efficiency of use, at the detecting time, of the auxiliary power source; and
Dm = vector indicative of dynamic parameters relating to maximum inlet/outlet current adsorption and slew-rate, during transient power transfer states of the auxiliary power module;

- determining a general efficiency state of the auxiliary power source;
- transmitting the detected data of the auxiliary power source to the first control unit of the vehicle via the CAN bus protocol communication line; and
- selectively connecting or disconnecting the auxiliary power generating devices from the main and/or auxiliary power storage devices to activate, by said first control unit, an operative mode of the vehicle selected from a maximum-charge mode of the power storage devices, and a maximum efficiency mode of the auxiliary power generating devices, in relation to the determined efficiency state of the auxiliary power generating devices and driving requirements of the vehicle.

According to a second aspect of the invention, an apparatus suitable for an adaptive control of an electric vehicle has been provided, comprising:

- at least one driving wheel connected to an electric motor ;
- a main control module comprising a main electric-power storage device operatively connectable to the electric motor of the driving wheel, and a first logic control unit conformed and programmed for a selective control of different operative modes of the vehicle; and

- at least one auxiliary power module connectable to the electric motor and to the main power storage device **characterised in that** said auxiliary power module comprises at least one auxiliary power source selected from auxiliary power storage devices and auxiliary power generating devices, and a second logic control unit connected to the first control unit by a CAN bus communication line;
- said first and second control units being conformed and programmed to receive and transmit control data through said CAN bus communication line;
- the first control unit is conformed and programmed to detect a state of residual charge of the main power storage device;
- the second control unit is conformed and programmed to detect, at a time, efficiency data of said at least auxiliary power source, comprising:

  Cm (Wh) = residual energy of the auxiliary power source;
  Am (Wh) = maximum energy absorption, at the starting, of the auxiliary power source; and
  Em (%) = actual efficiency of use, at the detecting time, of the auxiliary power source; and
  Dm = vector indicative of dynamic parameters relating to maximum inlet/outlet current adsorption and slew-rate, during transient power transfer states of the auxiliary power module;

  said first and second control units being further programmed to:

- communicate the detected data of the auxiliary power module to the first control unit via said CAN bus protocol communication line,
- determine a general efficiency state of the auxiliary power source; and
- activate by said first control unit an operative mode of the vehicle selected from a maximum-charge mode of the main and/or auxiliary power storage devices, and a maximum efficiency mode of the auxiliary power generating devices in relation to the determined efficiency state of the auxiliary power generating devices, and driving requirements of the vehicle.

BRIEF DESCRIPTION OF THE DRAWINGS

The invention will be better described below with reference to the example of the attached drawings, in which:

Fig. 1 shows, by way of example, an electric vehicle comprising a control apparatus according to the invention;
Fig. 2 shows a side view of the chassis of the vehicle in figure 1;
Fig. 3 shows a general block diagram of the main control the auxiliary power modules of the vehicle and intercommunication lines;
Fig. 4 shows in greater detail the main control module of the vehicle and main power storage device;
Fig. 5 shows in detail the auxiliary power module of figure 3, comprising an auxiliary power generating device;
Fig. 6 is an explicative diagram, similar to the general diagram of fig. 3, comprising three different auxiliary power modules;
Fig. 7 is a first flow diagram illustrating the control steps of the auxiliary power generating module comprising an endothermic engine;

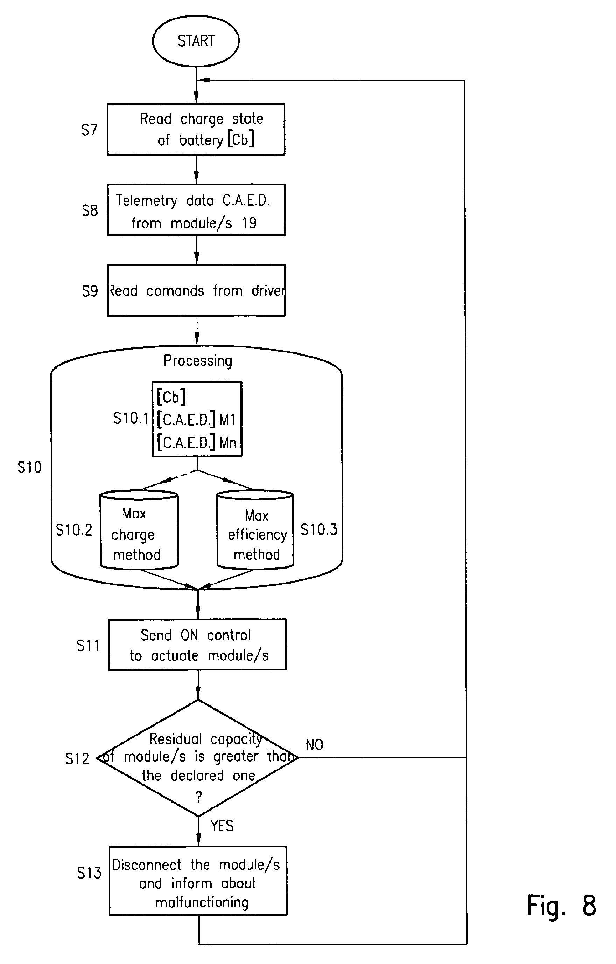

Fig. 8 is a second flow diagram illustrating the control and management steps of the power storage and power generating devices.

DETAILED DESCRIPTION OF THE INVENTION

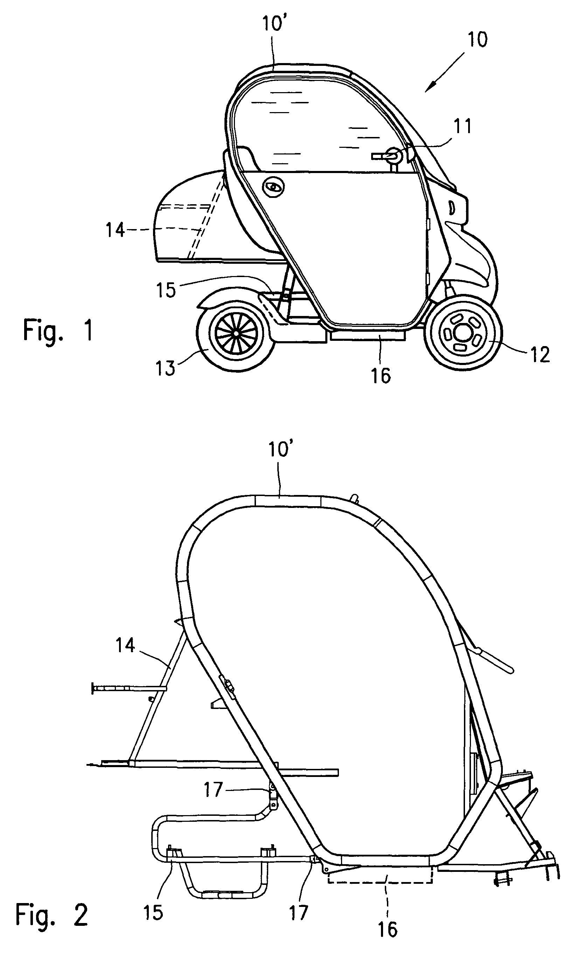

Figure 1 shows a view of a generic series-hybrid vehicle 10 of the light type, more commonly known as "quadricycle". The vehicle 10 basically comprises a main chassis 10' defining a vehicle cab for a driver who may control the vehicle through a steering system 11. The vehicle 10 is provided with fore driving wheels 12, each comprising an electric motor 21, and rear wheels 13; reference number 14 indicates a first auxiliary chassis, whereas reference number 15 indicates a second auxiliary chassis, both fastened, in a removable manner, to the main chassis 10' of the vehicle.

The chassis 10' forms part of a main module conformed to support a battery pack 16, forming part of a control and electric power storage system of the vehicle, necessary for supplying power to the motors 21 of the driving wheels 12; in turn, the auxiliary chassis 14 is conformed to contain the items to be transported. Lastly, the second auxiliary chassis 15, positioned below chassis 14, is conformed to support an auxiliary electric power source such as an electric power generating device forming part of an auxiliary module, operatively connectable to the main control module, of the vehicle via a CAN bus communication line, as explained further on.

Auxiliary chasses 14 and 15 are fastened in a removable way to the main chassis 10' of the vehicle, in any appropriate way for easy access from outside, to allow their easy removal and/or replacement. In the case of chassis 15, this makes it possible to remove the entire power generating module, both for its overhaul and/or possible replacement, while maintaining the electric control system of the vehicle in an active condition.

Any system may be used for fastening the modules, for example by using connection rods 17 with holes for insertion of fastening bolts; the shape and mechanical characteristics of the various chasses may be any kind and different to the ones shown.

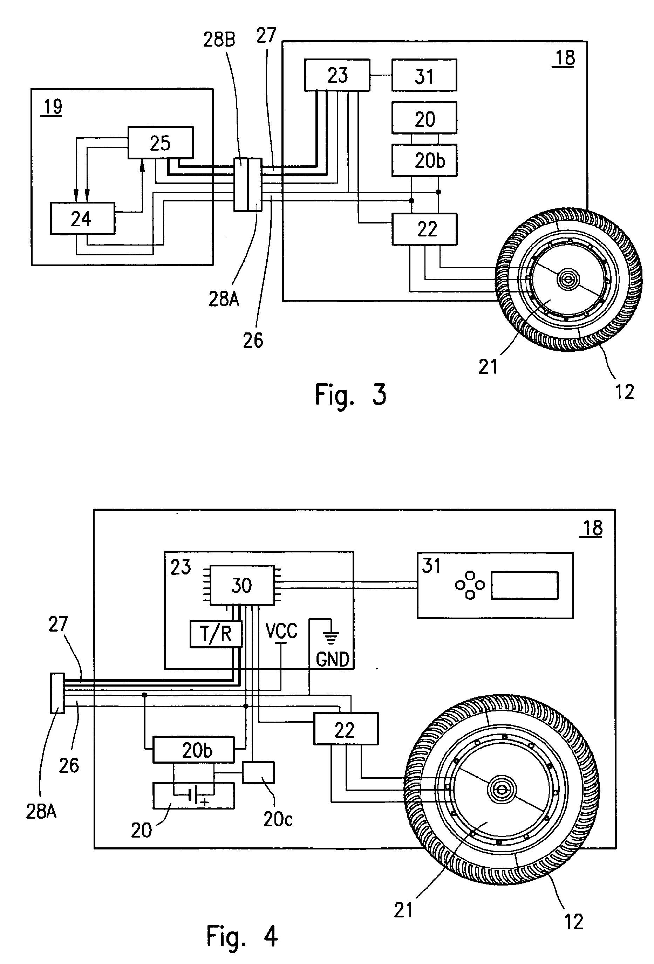

Figure 3 shows a general block diagram of the apparatus according to the invention; in particular, the apparatus comprises a main control module 18 to store electric power and to control the vehicle by a driver and auxiliary power module 19 comprising an auxiliary electric power source. Each module 18 and 19 has its own logic control unit, appropriately conformed and programmed to transmit and receive control data and/or information via a CAN bus communication protocol line.

As shown in figure 3, the main control module 18 of the vehicle comprises a first electric power storage device 20 such as a battery and power converter 20b, to supply power to the electric motors 21 of permanent magnet type of the driving wheels 12 (only one shown), via a DC/AC converter 22 suitable for converting the DC power voltage of the battery 20, in an AC power voltage for the electric motors 21. Reference number 23 also indicates a first logic control unit for the main module 18 of the vehicle, operatively connected to the converter inverter 22 for controlling the power supplied to the electric motors 21.

Again with reference to figure 3, the auxiliary power module 19 comprises an auxiliary electric power source 24, and a second logic control unit 25, operatively connected to the main power generator 24 by a communication line. The auxiliary power source 24 in turn is connected to the main power storage device or battery 20 of the module 18, via a power bus 26, whereas the two logic control units 23 and 25 are connected to each other through a communication line 27 suitable for transmitting control data between the modules 18 and 19 by a CAN bus protocol. Lastly reference number 28A and 28B indicate two connectors defining a connection interface for the power bus 26 and CAN bus line 27, between module 18 and module 19.

The power storage device 20 may be of any suitable type such as a lead battery or a supercapacitor; at the same time the auxiliary power source may comprise one or more auxiliary power storage devices and one or more auxiliary power generating devices of any type, such as a motogenerator, a fuel cell, separately or in combination each other.

The main control module 18 is removably fastened to the main chassis 10', whereas the auxiliary power module 19 is fastened to the removable chassis 15; therefore, the use of a power bus 26, a CAN bus communication line 27 and a connection interface 28A and 28B between the main control module 18 and the removable auxiliary power module 19, allows several substantial advantages, including, for example:

a) possibility of removing the auxiliary power module 19 from the vehicle, simply by separating the two connectors 28A and 28B of the interface, and detaching the auxiliary chassis 15 from the chassis 10' of the vehicle; this allows possible overhauling of module 19 and/or replacement with another module of identical or different type, provided it has the same connection interface and is conformed to use the same CAN bus communication protocol line 77;
b) possibility of using the electric vehicle even without any auxiliary power module; and
c) lastly, the possibility of equipping one vehicle with two or more auxiliary power modules, to provide a plurality of auxiliary electric power sources of the same and/or different type, provided the auxiliary power modules have the same interface and their logic control units are conformed and programmed to transmit and receive control data and/or signals, again with identical CAN bus communication protocol;
d) possibility to sell the electric vehicle provided with the main control module only, and successively retrofit the vehicle with an auxiliary power module.

All this, as stated further on, allows the management of the electric power source and power storage devices, with two different operative modes, in particular on the basis of a first operative mode of so called "maximum charge" and exploitation of the electric power storage device 20 of the vehicle, and "maximum efficiency" of the auxiliary power module or modules, as explained further on.

The first control unit 23 of the main of control module 18 is responsible for managing the interaction with a control panel 31, accessible to a driver; in particular, the control unit 23, through a display, is capable of providing the driver with useful driving information, for example the speed of the vehicle, the operative state of the power storage and power generating devices, such as the residual charge Cb of the battery 20, the operative state of the power generator 24, and other data or information, giving the driver the possibility of selectively controlling and managing the operative and driving modes of the vehicle.

In particular, the main functions of the control unit 23 for management of the entire system, relate to:

- control of the charge state Cb of the battery 20;

- management of the converter 20b for the power storage device 20 and of the converter 22 for enabling and disabling of the electric motor or motors 21 of the driving wheels 12;
- management of the electric power generating device or power source 24 of the auxiliary module or modules 19, according to a method which maximises the efficiency of the auxiliary modules, and the charge of the power storage devices.

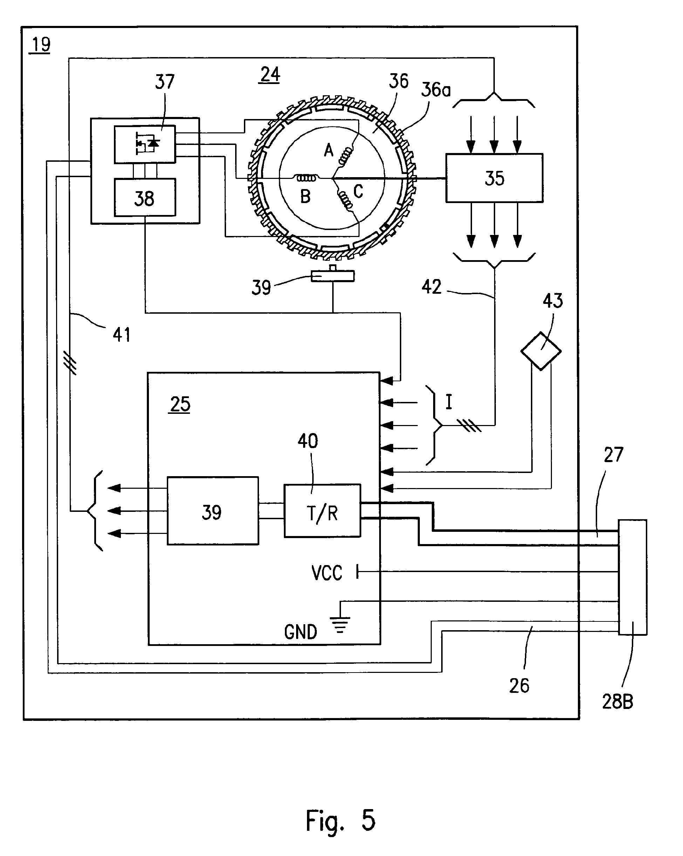

In turn, in the case the auxiliary electric power source 24 of the auxiliary module 19 is consisting of an electric power generator as shown in figure 5, the control unit 25 controls the electric power generator 24, and is connected to a number of transducers which maintain the system in optimum conditions; in particular, the control unit 25 enables/ disables the power generator 24 on control signals of the control unit 23 of the main module 18 of the vehicle. It also detects and communicates to the main control unit 23 telemetry data of the auxiliary power module 18.

Figure 4 shows in detail the control and power storage module 18 of the vehicle; in figure 4, the same reference numbers of figure 3 have been used to indicate similar or equivalent parts.

In particular, in the example shown, the control unit 23 includes a microcontroller 30 operatively connected to the positive pole of the battery 20 to receive by current and temperature detecting means 30a, control data indicative of value of inlet/outlet electric current (lo) and temperature (Tb) useful for calculation of the effective state of charge (Cb) of the battery. The control unit 23 is connected to a control panel 31 consisting of a graphic interface with the driver.

As shown, microcontroller 30 is also connected to the interface connector 28A of the CAN bus data transmission line 27, through a CAN transmitter/receiver device TR, whereas VCC indicates the DC power supply voltage and GND is a connection to ground.

Figure 5 shows in greater detail an auxiliary power module 19 comprising an electric power generating device 24; according to this example, the electric power generator 24 of the module 19 comprises an endothermic engine 35 mechanically connected to the rotor of a reversible electric machine 36, more simply referred to as motogenerator, suitable for working in a reversible way both as an electric motor to start the engine 35, and as a voltage generator to charge the battery 20 of module 18, and to supply power to the ignition circuit of the engine 35 after has been started.

The motogenerator 36, in the example under consideration, is consisting of a synchronous electrical machine, for example a DC three-phase brushless motor, of which the three phase windings A, B, C are fed by the battery 20 via an electronic converter/rectifier 37 connected to a microcontroller 38; a position sensor 39 is capable of supplying the microcontroller 38 with data signal indicative of the angular position of the rotor of the motogenerator 36, referred to the thermal cycle of the endothermic engine 35; control systems for synchronous electric motors of permanent magnet type, used both to start an endothermic engine and to generate voltage in motor vehicles, are known for example in US-A-5,065,086 as part of the present description.

The auxiliary power module 19 also includes a second logic control unit 25 for the endothermic engine 35, comprising a microcontroller 39 for the detection and transmission, to the first control unit 23, of telemetry data of the auxiliary power module 19, through its own CAN transmission/reception block 40. The reference number 26 in figure 5 once again indicates the power bus, whereas reference 27 indicates the CAN bus data communication line.

The logic control unit 25, via a multiple connection line 41, is capable of managing the phased events of the endothermic engine 35, such as, for example, the starting phase, the fuel injection phase and the running or r.p.m. of the engine.

The logic control unit 25 also receives at its inlet I position data of the engine from an Hall sensor 39 and a throttled wheel 36a of the electric machine and telemetry data from the endothermic engine 35 via the multiple line 42, for example the engine temperature, data signal from a lambda probe, data signal relating to the upper dead point of the engine 35, and external pressure and temperature provided by special sensors schematically indicated by the reference number 43.

As previously mentioned, in substitution of the endothermic engine of the auxiliary power module 19 in figure 5, it is possible to use one or more electric power sources such as an electric power generating device of any type, for example a fuel cell, an auxiliary electric power storage device in the module, or two or more auxiliary power modules of a same or different type, connectable to vehicle control module 18 via a CAN interface, provided the auxiliary power modules are conformed and programmed to use the same CAN bus communication protocol.

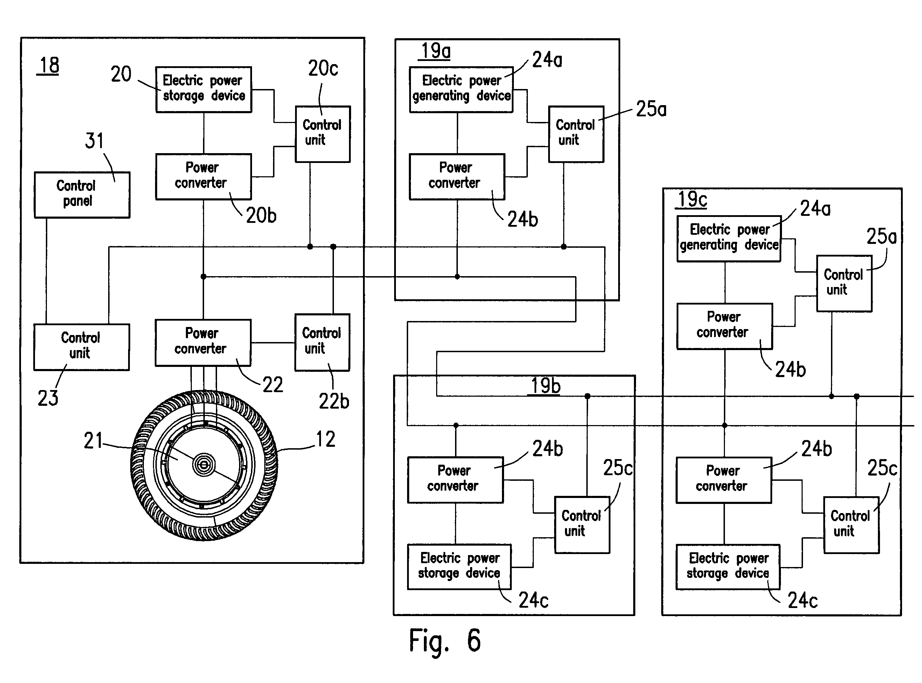

The above is shown for illustrative purpose in figure 6, in which the same reference numbers have been used to indicate similar or corresponding functional blocks or devices.

In figure 6, reference number 18 has been again used to indicate the main control module of the vehicle, while reference numbers 19a, 19b and 19c have been used to indicate three different auxiliary modules, namely:

the auxiliary module 19a comprising the electric power generating device 24a, the power converter 24b and control unit 25a;
the auxiliary module 19b comprising the electric power storage device 24c, the power converter 24b and the control unit 25c; and

the auxiliary module 19c, comprising in combination an electric power generating device 24a, an electric power storage device 24c and respective power converters 24b and control units 25a and 25c, as shown.

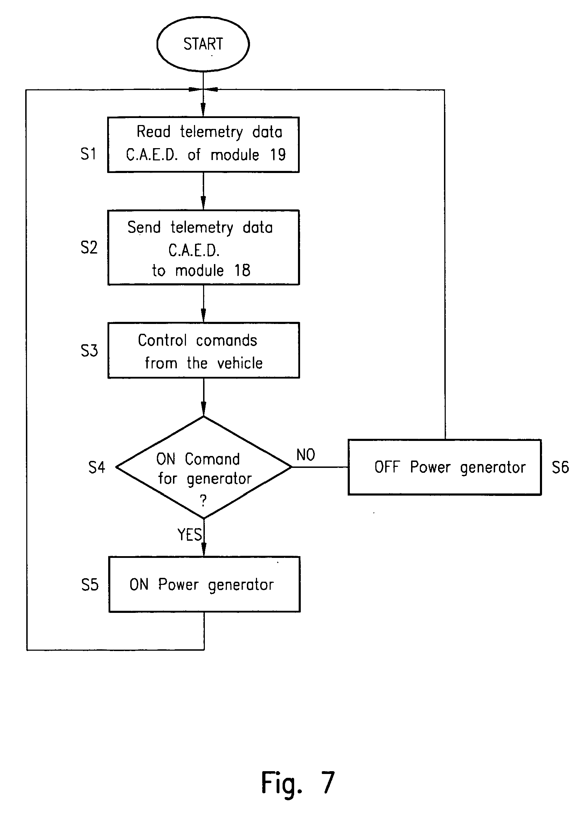

The main control module 18 of the vehicle may selectively enable/disable each auxiliary power module 19, separately or in combination with other power modules, on the basis of a management method of the modules which foresees, for the driver of the vehicle, the possibility of choosing between two specific drive modes: one called "maximum charge" for the main electric power storage device 20 and the "maximum efficiency" of the auxiliary power module or modules 19; all on the basis of calculation criteria and selection modes of the auxiliary modules programmed by the vehicle control unit 23. This may be better clarified with reference to the flow diagrams in figures 6 and 7.

Figure 7 shows the flow diagram for controlling an auxiliary power module 19 necessary to detect the characteristic data of the module itself, and to communicate with the main module 18; in the specific case of figure 6, by way of example, reference has been made to a module 19 provided with an electric power generator 36 connected to an endothermic engine 35, specifying that what stated for the example of figure 6 also applies for any other type of auxiliary power module 19, irrespective of the mode for power generating device or power source.

Returning to the flow diagram in figure 7, after the START signal, the duly programmed control unit 25 reads the significant telemetry efficiency data (Cm, Am, Em, Dm) of the auxiliary module 19, step S1, sending subsequently said efficiency data Cm, Am, Em and Dm to the logic unit 23 of the control module 18 of the vehicle, step S2.

The detected telemetry control data sent at a time by the auxiliary module or modules 19 to the main module 18 of the vehicle will be now described:

Cm= residual energy of the auxiliary module 19 to provide electrical power in Watt - hour (Wh), referred to the specific operative state of the module at the current time, that is at the time of telemetric reading of the control data, providing information on the capability of auxiliary module 19 to provide the electric power necessary to the main control module 18, for a residual time depending upon the specific operative conditions of the module itself;

Am= maximum energy absorption required at each starting of the motogenerator 36 of the module 19, or at the connection of the auxiliary power source, again in Watt - hour (Wh);

Em= use efficiency of the auxiliary module 19, in percentage (%) of power generation or supply;

Dm = dynamic parameter indicative of the maximum current adsorption and slew-rate, during transient between activation and deactivation of the auxiliary power module.

More precisely the vector D comprises the following parameters: Max Outlet current (A), Max Inlet current (A), slew-rate S/R (A/ms), provided by the manufacturer:

D = (Outlet 150A ö S/R 0,17 A/ms) for a motogenerator;

D = (Outlet 500A ö Inlet 500A ö S/R 10 A/ms) for a supercapacitor;

D = (Outlet 25A ö Inlet OA ö S/R 0,01 A/ms) for a lead battery.

The management policy for activation of auxiliary modules 19 will be a function depending on the instant current required by the driving motor or motors, by CAED values of modules 19 and by the main power storage device 20, as well as from the driving mode selected by the driver, such as "maximum charge" and "maximum efficiency".

Unlike EP-A-1745967, the apparatus according to the present invention is able to identify the real operative condition of the auxiliary power module or each auxiliary module 19, disabling the auxiliary module or modules 19 damaged or malfunctioning. The control unit 23 of the main control module 18, on the ground of data Am, is able to disabling the auxiliary module or modules 19 that do not comply with the Am data detected by control unit 23.

For example, for starting an auxiliary module 19 comprising an endothermic engine, the power storage device or battery 20 of the main module 18 must provide an amount of electric power to the motogenerator 36.

Sensing by a current sensor in the feeding circuit of motogenerator 36, the value of the current required to start the same motogenerator 36, the control unit 23 of the module 18 will prevent from enabling or starting an auxiliary module 19 requiring an energy higher than the Am value received from the same module 19; therefore the risk to damage the entire control system of the vehicle, by the activation of inefficient auxiliary modules 19, is avoided.

Am parameter, beside to constitute a limit of use for auxiliary modules 19, is relevant in determining the activation management of the same modules 19. In fact, an auxiliary module 19 having high Am value, such as a motogenerator, has a low efficiency degree if it is frequently activated and deactivated. Conversely an auxiliary module 19 having a negligible Am value, such as an electric battery may be activated and deactivated at any time, without involving any relevant energy loss. The proposed apparatus according to the invention therefore allows the management also of auxiliary modules 19 of new solution, without involving the necessity to upgrade the control unit 23 of the main module 18 of the vehicle.

By way of example, in the case shown in figure 5, in which the auxiliary module 19 comprises a motogenerator 36 and an endothermic engine 35, the calculation of Cm is made on the basis of:

  i) fuel consumption power generated ratio CCEG, of the engine 35, expressed in litres/kWh, in the best conditions of use defined by the manufacturer;
  ii) the residual quantity Lb of fuel in the tank;
  iii) output voltage Vg of the motogenerator 36, when working as voltage generator.

Calculation of value Cm for an auxiliary or power generation module 19 including an endothermic engine may therefore be calculated according to the following formula:

$$1)\ Cm = Lb/CCEG \times Vg$$

CCEG= is a parameter known a priori because it is estimated by the manufacturer of the module, on the ground of tests performed in optimal conditions of Rpm (revs of the motor), and engine temperature.
For calculation of Cm, a fuel level probe in the tank is therefore necessary for estimation of the litres Lb of fuel present in the tank.
Am= is a data provided by the module manufacturer which, on the basis of tests, defines the maximum power necessary to start the engine, expressed in Wh.
Em= is the current efficiency detected at the time of use of the auxiliary module 19, expressed in percentage (%) of power generation or supply. This signifies that, at the current conditions of use, the module can generate a power equal to Cm x Em.
Dm = is a datavector provided again by the manufacturer.
In the case of an endothermic engine, Em will depend on the revolution number (Rpm), since CCEG ratio varies with the rpm.
After the control unit 25 has sent the telemetry data Cm, Am, Em, Dm stored in a memory, to the logic unit 23 of module 18, step S2, figure 6, and after the latter has processed the data received on the basis of a programmed calculation procedure, the control unit 25 receives from control unit 23 of the vehicle a command to switch ON the power generator 24, step S3. Now control data Cm, Am, Em, Dm provided by module 19 are compared with corresponding data required by the module 18 to start the engine; if "YES", the logic unit 25 of auxiliary module 19 controls start-up of the power generator 24, in the specific case the endothermic engine 35, step S5; if "NO", that is if one or more efficiency data Cm, Am, Em, Dm of module 19 do not correspond to CAED data required by module 18, for example because of the level of fuel in the tank is below a threshold value, the system passes to step S6 for disabling of the motogenerator 24.
Coming now to the flow diagram in figure 7, taking into account the previous diagram in figure 6, it is possible to describe in greater detail the method for controlling an electric vehicle according to this invention, both when the vehicle is equipped with a single auxiliary module 19, or several auxiliary modules, generically indicated with M1, M2 and Mn in the flow diagram in figure 7.
After START, the control unit 23 of the main module 18 takes a reading of the residual capacity Cb that is the electric power, stored in the battery 20, or rather the state of charge of battery 20, step S7.
The residual capacity Cb may be obtained through an estimation of the State of Charge SOC, of the battery in combination with rating data of the battery, which expresses the rated capacity Co.
The estimation of the SOC may be obtained with a simplified method of lead battery of Jean Paul Cun (J.P. Cun, J.N. Fiorina, M. Fraisse, and H. Mabboux. The experience of an ups company in advanced battery monitoring. Telecommunications Energy Conference, 1996. INTELEC '96., 18th International, pages 646-653, Oct 1996).
SOC is defined in the following manner:

$$2)\ SOC = 1 - Q(t)/C(t)$$

Q(t) = Integral(Io(t),0,t)
integral of output current Io extracted in the time interval [0,t].

$$3)\ C(t) = Co\ (1 + A' \times (Tb(t) - 25))$$

C(t)= the rated capacity of the battery at temperature Tb(t), at instant t.
Co= the rated capacity of the battery (provided by the manufacturer).
A' = charge state of main power storage device.

Calculation of C(t) may be obtained through measurement of the temperature Tb(t) of the battery at the time t, whereas the current value lo(t) may be obtained by a current sensor connected to the battery terminal.
In conclusion, the capacity Cb of the battery may be estimated in the following way:

$$4)\ Cb = SOC \times Co$$

At the same time, the control unit 23 of module 18 receives telemetry data Cm, Am, Em, Dm from the control unit 25 of the auxiliary module 19, or sequentially from each auxiliary module 19, step S8, whereas in the subsequent step S9, the same control unit 23 reads the data relating to the commands sent by the driver of the vehicle via the control panel 31.
Once the reading is complete and/or the necessary control data Cm, Am, Em, Dm has been received, the control unit 23 processes said data, step S10, on the basis of specific calculation criteria programmed into the same control unit 23.
The first assumption is the case in which the vehicle is equipped with a single auxiliary power module 19. In this case, the control unit 23, having detected the residual capacity Cb of the battery 20, or, more generally of the electric power storage system, step S7; taking into account the telemetry data Cm, Am, Em, Dm received from the auxiliary module 19, step S8, processes it, step S10.1, on the basis of a calculation of general efficiency value Gm of the auxiliary module, according to the following formula:

$$5)\ Gm = Em-(Am/Cm \times 100)$$

Therefore, depending on the command of the driver of the vehicle, the working mode is selected according to the method of "maximum charge" of electric storage device 20 of the main control module 18, step S10.2, or "maximum efficiency" of the electric power source 24 of the auxiliary module 19, step S10.3.
Subsequently, the control unit 23, through the CAN bus line 27, sends to the control unit 25 an ON command for enabling a module M, step S11; if affirmative, "YES", step S4, switches ON the power generator 24, step S6.
At this point, the control unit 23 of the vehicle checks whether or not the module M, for starting the power generator, requires a current absorption Am higher than the declared one, step S12; if the answer is "NO", the system returns to step S7; if the answer is "YES", the auxiliary module 19 is disabled and the system communicates to the driver the malfunctioning, step S13, returning to the initial step S7.
It is now assumed that the vehicle comprises "n" auxiliary power generating modules 19, for example four modules of a same type, and/or a different type M1, M2, M3 and M4. The characteristic of the CAN bus communication and the management method according to the invention offer the possibility to add and connect two or more power generating modules 19 or auxiliary power sources to the electric vehicle, without the need of replacing the control unit of module 18. The vehicle is therefore capable of communicating with any auxiliary module 19 which complies with the physical connection interface 28A, 28B, and the CAN bus communication method of CAE data.
In this case as well, the microcontroller 30 logic control unit 23 is programmed with a calculation procedure capable of controlling activation of the various auxiliary modules, separately, according to the procedure previously referred for the single auxiliary module 19.
In this case as well, after the START, the logic control unit 23 of the main module 18 reads the residual capacity Cb of the battery, step S7; in the meantime, the logic control unit 25 of each auxiliary module 19 reads its Cn, An, En stored data, which are sent to the logic unit 23 of the vehicle, step S8. On the basis of the commands by the driver of the vehicle, step S9, the logic control unit 23 once again processes the received telemetry data, step S10.1, and instantaneously creates a general efficiency list by positioning the auxiliary modules 19, according to a decreasing order of the general efficiency value "G", calculated on the basis of formula "5" previously indicated.
By way of example, reference is made to table I, which shows a general efficiency list in which the vehicle comprises with four electrical power generating modules:

TABLE I

| ORDER | MODULE | GENERAL EFFICIENCY VALUE G |
|-------|----------|----------------------------|
| 1 | Module 3 | 70% |
| 2 | Module 1 | 67% |
| 3 | Module 4 | 40% |
| 4 | Module 2 | 38% |

Once the list is created, the driver of the vehicle on the ground of said list appearing on the control panel 31 is once again able to select and use of the modules 19, on the basis of the maximum charge or the maximum efficiency method.

Method of maximum charge

On the basis of this method, the vehicle control unit 23 enables indiscriminately all or part of power generating modules 19 M1öMn, as a function of the capacity Cb or charge state of the battery 20.

If it is planned to enter a limited traffic zone with the vehicle, in which use of the endothermic module is not allowed, or in which emission of pollutant substances is not permitted, this solution allows the charging of battery 20 to the maximum voltage value, or capacity.

An example of activation in time is shown, by way of example, in table II.

TABLE II

| Time | Battery charge Cb% | Enabled modules |
|------|--------------------|-----------------|
| T1 | Cb = 90% | Modules 3,1,4,2 |
| T2 | Cb = 94% | Modules 3,1,4 |
| T3 | Cb = 98% | Modules 3,1 |
| T4 | Cb = 100% | All modules disabled |

The table II therefore shows that at time T1, when charge Cb is reduced to 90%, all the auxiliary modules 3, 1, 4 and 2 of the vehicle previously listed according to their general efficiency value G are enabled. As the battery charge increases, the same table II shows that, at time T2, when the battery of module 18 (starting from the module 2 having the lower listed Cb value), reaches the Cb value of module 4, that is Cb of the immediately preceding module of the list, the module 2 is disabled: the same apply to times T3 and T4 and the modules 19 of lower general efficiency are gradually disabled, until the battery is charged at 100%; at time T4, the control unit 23 will disable all the auxiliary modules 19, allowing the vehicle to be driven in absence of any pollution, by using the electrical power of the battery 20 of the main module 18.

Maximum efficiency method

According to this method, on the basis of a command by the driver, one or more auxiliary modules 19 will be activated simultaneously, according to the order defined by the general efficiency list "G", whenever the vehicle requires more or less power, to compensate the reduced capacity Cb of battery 20.

Since continually transferring power to the battery, from a viewpoint of the entire system, could prove to be inefficient, this method allows enabling of auxiliary modules only when this is effectively necessary, in order to avoid possible damage to the battery if its charge or capacity value Cb is maintained at a low percentage value.

Again with reference to the previous example, the enabling in time the four modules, is shown in table III.

TABLE III

| Time | Cb% battery charge | Enabled modules |
|------|--------------------|-----------------|
| T1 | Cb = 90% | all disabled |
| T2 | Cb = 80% | Module 3 |

(continued)

| Time | Cb% battery charge | Enabled modules |
|------|--------------------|-----------------|
| T3 | Cb = 75% | Modules 3,1 |
| T4 | Cb = 65% | Modules 3,1,4,2 |

On the basis of what is stated above, it is also possible to calculate the residual total capacity CRC of the vehicle, as the sum of capacity Cb of the power storage device, plus the sum of residual capacities of each individual auxiliary power module 19, according to formula 6:

$$6) \quad CRC = Cb + \sum(Cm - (f \times Am) \times Em)$$

where

CRC= residual capacity of the vehicle;
Cm, Am, Em have the meaning previously mentioned;
f= number of estimated start-ups of each power generation module, during a specific use.

From what has been said and demonstrated, it is clear that equipment and a method have been supplied for controlling power in a series-hybrid electric vehicle, through which the results previously indicated are obtained; it remains clear that other changes and/or variants could be made to the equipment and/or its parts and/or the control method, without departing from the claims.

**Claims**

1. A method for an adaptive control of an electric vehicle (10) in which the vehicle comprises:

   - at least one driving wheel (12) connected to an electric motor (21);
   - a main control module (18) comprising a main electric power storage device (20) operatively connectable to the electric motor (21), and a first logic control unit (23) suitable for a selective control of different operative modes of the vehicle; and
   - at least one auxiliary power module (19) operatively connectable to the electric motor (21) and to the main power storage device (20),

   **characterised by**:

   - providing said auxiliary power module (19) with at least one auxiliary power source (24) selected from auxiliary power storage devices and auxiliary power generating devices, and a second control unit (25) connected to the first control unit (23) by a CAN bus communication line (27);
   - said first and second control units (23, 25) being conformed and programmed to receive and transmit control data through said CAN bus communication line (27) for:
   - detecting by the first control unit (23) a state of residual charge (Cb) of the main power storage device (20);
   - detecting, at a time, by the second control unit (25) efficiency data of the auxiliary power source (24), comprising the following data:

     Cm (Wh) = residual energy of the auxiliary power source;
     Am (Wh) = maximum energy absorption, at the starting, of the auxiliary power source;
     Em (%) = actual efficiency of use, at the detecting time, of the auxiliary power source; and
     Dm = vector indicative of dynamic parameters relating to maximum inlet/outlet current adsorption and slew-rate, during transient power transfer states of the auxiliary power module;

   - transmitting the detected efficiency data of the auxiliary power source (24) from said auxiliary power module (19) to the first control unit (23) of the vehicle via the CAN bus protocol communication line (27);
   - determining a general efficiency value (Gm) of the auxiliary power source (24) by said first control unit (23) and taking into account said efficiency data (Cm, Am, Em, Dm) received from said auxiliary power module (19);

and

- selectively connecting or disconnecting the auxiliary power generating devices (24) from the main and/or auxiliary power storage devices (20) to activate, by said first control unit (23), an operative mode of the vehicle (10) selected from a maximum-charge mode of the power storage devices (20), and a maximum efficiency mode of the auxiliary power generating devices (24)

wherein in said maximum-charge mode said first control unit (23) enables said auxiliary power modules (19) as a function of the capacity (Cb) of said main power storage device (20) and in relation to the determined general efficiency value (Gm) of the auxiliary power generating devices (24), and driving requirements of the vehicle, in order to allows the charging of the main power storage device (20) to the maximum voltage value or capacity, and wherein in said maximum efficiency mode at least one auxiliary power module (19) is activated, according to an order defined by the general efficiency value (Gm), whenever the vehicle requires more or less power, to compensate the reduce capacity (Cb) of said main power storage device (20).

2. The control method according to claim 1, in which the vehicle (10) comprises a plurality of auxiliary power modules (19), **characterised by** the steps of
computing the general efficiency value (Gm), of each auxiliary power module (19) according to the formula:

$$Gm = Em-(Am/Cm \times 100)$$

where Cm= residual power capacity of the auxiliary module (19);
providing a list of general efficiency value (Gm) by positioning the auxiliary power modules (19) in the list according to a decreasing order of said general efficiency value (Gm); and
selecting an operative mode of the vehicle (10) on ground of the general efficiency value (Gm).

3. The control method according to claim 2, further **characterised by** the steps of:

calculating the residual total capacity (CRC) of the vehicle as a sum of the capacity (Cb) of the main power storage device (20), plus the estimated residual capacity (Cm) of each auxiliary power module (19), on the basis of the formula:

$$CRC= Cb+\sum(Cm-(fxAm)xEm)$$

Where

CRC= residual capacity of the vehicle;
Cm, Am, Em have the meaning previously indicated; and
f= estimated number of start-ups of each auxiliary power module (19) during a specific use.

4. An apparatus suitable for adaptive control of an electric vehicle (10) comprising:

- at least one driving wheel (12) provided with an electric motor (21);
- a main control module (18) having a main electric-power storage device (20) operatively connectable to the electric motor (21) of the driving wheel (12), and a first logic control unit (23) conformed and programmed to selectively control different operative modes of the vehicle (10) and to detect a state of residual charge (Cb) of the main power storage device (20); and
- at least one auxiliary power module (19)

**characterised in that**
the auxiliary power module (19) comprises at least one auxiliary power source (24) selected from auxiliary power storage devices and auxiliary power generating devices, and a second logic control unit (25) connected to the first control unit (23) by a CAN bus communication line (27);

- said first and second control units (23, 25) being conformed and programmed to receive and transmit control data through said CAN bus communication line (27)

- the second control unit (25) is conformed and programmed to detect, at a time, efficiency data (Cm, Am, Em, Dm) of the auxiliary power source (24), comprising:

Cm (Wh) = residual energy of the auxiliary power source (24);
Am (Wh) = maximum energy absorption, at the starting, of the auxiliary power source (24); and
Em (%) = actual efficiency of use, at the detecting time, of the auxiliary power source (24);
Dm = vector indicative of the dynamic parameters of the maximum inlet/outlet current adsorption and slew-rate, during transient power transfer states of the auxiliary power module;

said first and second control units (23, 25) being further programmed to:

- communicate the detected efficiency data (Cm, Am, Em, Dm) of the auxiliary module (19) to the first control unit (23) via a CAN bus protocol communication line (27),
- determine a general efficiency value (Gm) of the auxiliary power source (24) by said first control unit (23) and taking into account said efficiency data (Cm, Am, Em, Dm) received from said auxiliary power module (19); and

activate by said first control unit (23) an operative mode of the vehicle (10) selected from a maximum-charge mode of the main power storage device (20), and a maximum efficiency mode of the auxiliary power source (24), wherein in said maximum-charge mode said first control unit (23) enables said auxiliary power modules (19) as a function of the capacity (Cb) of said main power storage device (20) and in relation to the determined efficiency value (Gm) of the auxiliary power source (24), and driving requirements of the vehicle (10), in order to allows the charging of the main power storage device (20) to the maximum voltage value or capacity, and wherein in said maximum efficiency mode at least one auxiliary power module (19) is activated, according to an order defined by the general efficiency value (Gm), whenever the vehicle requires more or less power, to compensate the reduce capacity (Cb) of said main power storage device (20).

5. The apparatus according to claim 4, **characterised by** comprising a plurality of auxiliary power modules (19) provided with auxiliary power sources of a same and/or of different type.

6. The apparatus according to claim 4, **characterised in that** the logic control unit (25) of the auxiliary power module (19) is conformed and programmed to detect the specific efficiency parameters (Cm, Am, Em, Dm) of the auxiliary module (19).

7. The apparatus according to claim 5, **characterised in that** the logic control unit (23) of the main control module (18) of the vehicle (10) is conformed and programmed to provide an efficiency list of the auxiliary power modules (19), according to the specific efficiency parameters (Cm, Am, Em, Dm) provided by the control units (25) of the auxiliary power modules (19).

8. The apparatus according to claim 4, **characterised in that** each auxiliary power module (1 9) is removably fastened to a frame (10') of the vehicle (10).


**Patentansprüche**

1. Verfahren für eine adaptive Steuerung eines elektrischen Fahrzeugs (10), wobei das Fahrzeug aufweist:

mindestens ein Antriebsrad (12), das mit einem Elektromotor (21) verbunden ist;
ein Hauptsteuermodul (18), das eine Hauptstromspeichervorrichtung (20), die funktional an den Elektromotor (21) anschließbar ist, und eine erste Logiksteuerungseinheit (23), die für eine selektive Steuerung unterschiedlicher Betriebsarten des Fahrzeugs geeignet ist, aufweist; und
mindestens ein Hilfsstrommodul (19), das funktional an den Elektromotor (21) und an die Hauptstromspeichervorrichtung (20) anschließbar ist,

**dadurch gekennzeichnet, dass**:

es das Hilfsstrommodul (19) mit mindestens einer Hilfsstromquelle (24), ausgewählt aus Hilfsstromspeichervorrichtungen und Hilfsstromerzeugungsvorrichtungen, und eine zweite Steuerungseinheit (25), die über eine CAN-Bus-Übertragungsleitung (27) an die erste Steuerungseinheit (23) angeschlossen ist, bereitstellt;

wobei die erste und die zweite Steuerungseinheit (23, 25) ausgestaltet und programmiert sind, Steuerungsdaten über die CAN-Bus-Übertragungsleitung (27) zu empfangen und zu senden, um

durch die erste Steuerungseinheit (23) einen Restladezustand (Cb) der Hauptstromspeichervorrichtung (20) zu detektieren;

jeweils durch die zweite Steuerungseinheit (25) Wirkungsgraddaten der Hilfsstromquelle (24) zu detektieren, die folgende Daten beinhalten:

Cm (Wh) = Restenergie der Hilfsstromquelle;

Am (Wh) = maximale Energieaufnahme, beim Starten, der Hilfsstromquelle;

Em (%) = tatsächlicher Nutzungswirkungsgrad, zum Zeitpunkt des Detektierens, der Hilfsstromquelle; und

Dm = Vektor, der auf dynamische Parameter in Bezug auf die maximale Einlass-/Auslassstromadsorption und Anstiegsgeschwindigkeit während vorübergehender Stromübergangszustände des Hilfsstrommoduls hinweist;

es die detektierten Wirkungsgraddaten der Hilfsstromquelle (24) vom Hilfsstrommodul (19) über die mit dem CAN-Bus-Protokoll arbeitenden Übertragungsleitung (27) zur ersten Steuerungseinheit (23) des Fahrzeugs sendet;

es einen allgemeinen Wirkungsgradwert (Gm) der Hilfsstromquelle (24) durch die erste Steuerungseinheit (23) bestimmt und die aus dem Hilfsstrommodul (19) empfangenen Wirkungsgraddaten (Cm, Am, Em, Dm) berücksichtigt; und

es die Hilfsstromerzeugungsvorrichtungen (24) wahlweise verbindet oder von den Haupt- und/oder Hilfsstromspeichervorrichtungen (20) trennt, um durch die erste Steuerungseinheit (23) eine Betriebsart des Fahrzeugs (10), ausgewählt aus einer Betriebsart mit maximaler Ladung der Stromspeichervorrichtungen (20) und einer Betriebsart mit maximalem Wirkungsgrad der Hilfsstromerzeugungsvorrichtungen (24), zu aktivieren,

wobei in der Betriebsart mit maximaler Ladung die erste Steuerungseinheit (23) die Hilfsstrommodule (19) in Abhängigkeit von der Kapazität (Cb) der Hauptstromspeichervorrichtung (20) und in Bezug auf den bestimmten allgemeinen Wirkungsgradwert (Gm) der Hilfsstromerzeugungsvorrichtungen (24) und Antriebsanforderungen des Fahrzeugs wirksam macht, um das Laden der Hauptstromspeichervorrichtung (20) bis zum maximalen Spannungswert oder zur maximalen Kapazität zu erlauben, und

wobei in der Betriebsart mit maximalem Wirkungsgrad mindestens ein Hilfsstrommodul (19) gemäß einer durch den allgemeinen Wirkungsgradwert (Gm) festgelegten Reihenfolge immer dann aktiviert wird, wenn das Fahrzeug mehr oder weniger Leistung benötigt, um die verringerte Kapazität (Cb) der Hauptstromspeichervorrichtung (20) auszugleichen.

2. Steuerungsverfahren nach Anspruch 1, wobei das Fahrzeug (10) eine Vielzahl von Hilfsstrommodulen (19) aufweist, **gekennzeichnet durch** die Schritte

Berechnen des allgemeinen Wirkungsgradwertes (Gm) jedes einzelnen Hilfsleistungsmoduls (19) nach folgender Formel:

$$Gm = Em - (Am/Cm \times 100)$$

wobei Cm = Restleistungskapazität des Hilfsmoduls (19); Bereitstellen einer Liste allgemeiner Wirkungsgradwerte (Gm) durch Setzen der Hilfsstrommodule (19) in der Liste entsprechend einer absteigenden Reihenfolge des allgemeinen Wirkungsgradwertes (Gm); und

Auswählen einer Betriebsart des Fahrzeugs (10) aufgrund des allgemeinen Wirkungsgradwertes (Gm).

3. Steuerungsverfahren nach Anspruch 2, ferner **gekennzeichnet durch** folgende Schritte:

Berechnen der Restgesamtkapazität (CRC) des Fahrzeugs als eine Summe aus der Kapazität (Cb) der Hauptstromspeichervorrichtung (20) und der geschätzten Restkapazität (Cm) jedes Hilfsstrommoduls (19) auf der Basis der Formel:

$$CRC = Cb + \sum(Cm - (fxAm) \times Em)$$

wobei

CRC = Restkapazität des Fahrzeugs;
Cm, Am, Em die zuvor genannten Bedeutungen haben; und
f = geschätzte Anzahl der Anfahrvorgänge jedes Hilfsstrommoduls (19) während eines spezifischen Einsatzes.

4. Für die adaptive Steuerung eines elektrischen Fahrzeugs (10) geeigneter Apparat mit:

mindestens einem Antriebsrad (12), das mit einem Elektromotor (21) versehen ist;
einem Hauptsteuerungsmodul (18), das eine Hauptstromspeichervorrichtung (20), die funktional an den Elektromotor (21) des Antriebsrades (12) anschließbar ist, und eine erste Logiksteuerungseinheit (23), die ausgestaltet und programmiert ist, nach Wahl unterschiedliche Betriebsarten des Fahrzeugs (10) zu steuern und einen Restladezustand (Cb) der Hauptstromspeichervorrichtung (20) zu detektieren, besitzt; und
mindestens einem Hilfsstrommodul (19),
**dadurch gekennzeichnet, dass**
das Hilfsstrommodul (19) mindestens eine Hilfsstromquelle (24), ausgewählt aus Hilfsstromspeichervorrichtungen und Hilfsstromerzeugungsvorrichtungen, und eine zweite Logiksteuerungseinheit (25), die über eine CAN-Bus-Übertragungsleitung (27) an die erste Steuerungseinheit (23) angeschlossen ist, aufweist;
wobei die erste und die zweite Steuerungseinheit (23, 25) ausgestaltet und programmiert sind, Steuerungsdaten über die CAN-Bus-Übertragungsleitung (27) zu empfangen und zu senden,
die zweite Steuerungseinheit (25) ausgestaltet und programmiert ist, jeweils Wirkungsgraddaten (Cm, Am, Em, Dm) der Hilfsstromquelle (24) zu detektieren, mit:

Cm (Wh) = Restenergie der Hilfsstromquelle (24);
Am (Wh) = maximale Energieaufnahme, beim Starten, der Hilfsstromquelle (24); und
Em (%) = tatsächlicher Nutzungswirkungsgrad, am Zeitpunkt des Detektierens, der Hilfsstromquelle (24);
Dm = Vektor, der auf die dynamischen Parameter der maximalen Einlass-/Auslassstromadsorption und Anstiegsgeschwindigkeit während vorübergehender Stromübergangszustände des Hilfsstrommoduls hinweist;

wobei die erste und die zweite Steuerungseinheit (23, 25) ferner programmiert sind,
die detektierten Wirkungsgraddaten (Cm, Am, Em, Dm) des Hilfsmoduls (19) über eine mit dem CAN-Bus-Protokoll arbeitende Übertragungsleitung (27) zur ersten Steuerungseinheit (23) zu übertragen,
einen allgemeinen Wirkungsgradwert (Gm) der Hilfsstromquelle (24) durch die erste Steuerungseinheit (23) zu bestimmen und die aus dem Hilfsstrommodul (19) empfangenen Wirkungsgraddaten (Cm, Am, Em, Dm) zu berücksichtigen; und
durch die erste Steuerungseinheit (23) eine Betriebsart des Fahrzeugs (10), ausgewählt aus einer Betriebsart mit maximaler Ladung der Hauptstromspeichervorrichtung (20) und einer Betriebsart mit maximalem Wirkungsgrad der Hilfsstromquelle (24), zu aktivieren,
wobei in der Betriebsart mit maximaler Ladung die erste Steuerungseinheit (23) die Hilfsstrommodule (19) in Abhängigkeit von der Kapazität (Cb) der Hauptstromspeichervorrichtung (20) und in Bezug auf den bestimmten allgemeinen Wirkungsgradwert (Gm) der Hilfsstromquelle (24) und Antriebsanforderungen des Fahrzeugs (10) wirksam macht, um das Laden der Hauptstromspeichervorrichtung (20) bis zum maximalen Spannungswert oder zur maximalen Kapazität zu erlauben, und
wobei in der Betriebsart mit maximalem Wirkungsgrad mindestens ein Hilfsstrommodul (19) gemäß einer durch den allgemeinen Wirkungsgradwert (Gm) festgelegten Reihenfolge immer dann aktiviert wird, wenn das Fahrzeug mehr oder weniger Leistung benötigt, um die verringerte Kapazität (Cb) der Hauptstromspeichervorrichtung (20) auszugleichen.

5. Apparat nach Anspruch 4, **dadurch gekennzeichnet, dass** er eine Vielzahl von Hilfsstrommodulen (19), die mit Hilfsstromquellen von derselben und/oder einer unterschiedlichen Art versehen sind, aufweist.

6. Apparat nach Anspruch 4, **dadurch gekennzeichnet, dass** die Logiksteuerungseinheit (25) des Hilfsstrommoduls (19) ausgestaltet und programmiert ist, die spezifischen Wirkungsgradparameter (Cm, Am, Em, Dm) des Hilfsmoduls (19) zu detektieren.

7. Apparat nach Anspruch 5, **dadurch gekennzeichnet, dass** die Logiksteuerungseinheit (23) des Hauptsteuerungsmoduls (18) des Fahrzeugs (10) ausgestaltet und programmiert ist, eine Wirkungsgradliste der Hilfsstrommodule (19) entsprechend den von den Steuerungseinheiten (25) der Hilfsstrommodule (19) bereitgestellten, spezifischen Wirkungsgradparametern (Cm, Am, Em, Dm), bereitzustellen.

8. Apparat nach Anspruch 4, **dadurch gekennzeichnet, dass** jedes Hilfsstrommodul (19) an einem Rahmen (10') des Fahrzeugs (10) entfernbar befestigt ist.

## Revendications

1. Procédé pour une commande adaptative d'un véhicule électrique (10), dans lequel le véhicule comprend :

   - au moins une roue d'entraînement (12) reliée à un moteur électrique (21) ;
   - un module de commande principal (18) comprenant un dispositif principal (20) de stockage de l'énergie électrique pouvant être opérationnellement raccordé au moteur électrique (21), et une première unité de commande logique (23) apte à une commande sélective de différents modes de fonctionnement du véhicule ; et
   - au moins un module d'alimentation auxiliaire (19) opérationnellement raccordable au moteur électrique (21) et au dispositif principal (20) de stockage de l'énergie,

   *caractérisé par*

   - l'équipement dudit module d'alimentation auxiliaire (19) avec au moins une source (24) d'énergie auxiliaire choisie parmi dispositifs de stockage d'énergie auxiliaire et dispositifs de génération d'énergie auxiliaire, et une deuxième unité de commande (25) reliée à la première unité de commande (23) par une ligne de communication (27) à bus CAN ;
   - lesdites première et deuxième unités de commande (23, 25) étant conformées et programmées pour recevoir et transmettre des données de commande via ladite ligne de communication (27) à bus CAN pour :
   - la détection par la première unité de commande (23) d'un état de charge résiduelle (Cb) du dispositif principal de stockage d'énergie (20) ;
   - la détection, à un moment donné, par la deuxième unité de commande (25), de données d'efficacité de la source d'énergie auxiliaire (24), comprenant les données suivantes :

      Cm (Wh) = énergie résiduelle de la source d'énergie auxiliaire ;
      Am (Wh) = absorption d'énergie maximale, au démarrage, de la source d'énergie auxiliaire ;
      Em (%) = rendement réel d'utilisation, au moment détecté, de la source d'énergie auxiliaire ; et
      Dm = vecteur indicatif de paramètres dynamiques de l'adsorption maximale du courant entrée/sortie et régiment lent, pendant des états transitoires de transfert de puissance du module d'alimentation auxiliaire ;

   - la transmission des données de rendement détectées de la source d'énergie auxiliaire (24) dudit module d'alimentation auxiliaire (19) à la première unité de commande (23) du véhicule via la ligne de communication (27) à protocole par bus CAN ;
   - la détermination d'une valeur du rendement général (Gm) de la source d'énergie auxiliaire (24) par ladite première unité de commande (23) et la prise en compte desdites données de rendement (Cm, Am, Em, Dm) reçues dudit module d'alimentation auxiliaire (19) ; et
   - la connexion ou la déconnexion sélectives des dispositifs (24) générateurs d'énergie auxiliaire des dispositifs (20) de stockage de l'énergie principaux et/ou auxiliaires pour activer, par ladite première unité de commande (23), un mode de fonctionnement du véhicule (10) choisi entre un mode "charge maximale" des dispositifs (20) de stockage de l'énergie, et un mode "rendement maximal" des dispositifs (24) générateurs d'énergie auxiliaire,

   dans lequel, dans ledit mode charge maximale, ladite première unité de commande (23) active ledit module d'alimentation auxiliaire (19) en fonction de la capacité (Cb) dudit dispositif principal de stockage d'énergie (20) et en relation avec la valeur du rendement général déterminée (Gm) des dispositifs (24) générateurs d'énergie auxiliaire, et des besoins d'entraînement du véhicule, de manière à permettre la charge du dispositif principal (20) de stockage de l'énergie à la valeur ou capacité de tension maximale, et

   dans lequel, dans ledit mode rendement maximal, au moins un module d'alimentation auxiliaire (19) est activé, selon un ordre défini par la valeur du rendement général (Gm), chaque fois que le véhicule réclame plus, ou moins, de puissance, pour compenser la capacité réduite (Cb) dudit dispositif principal de stockage d'énergie (20).

**2.** Procédé de commande selon la revendication 1, dans lequel le véhicule (10) comprend une pluralité de modules d'alimentation auxiliaires (19), *caractérisé par les étapes de :*

calcul de la valeur du rendement général (Gm) de chaque module d'alimentation auxiliaire (19) selon la formule :

$$Gm = Em-(Am/Cm \times 100)$$

où Cm = capacité énergétique résiduelle du module auxiliaire (19) ;
fourniture d'une liste de valeurs du rendement général (Gm) par positionnement des modules d'alimentation auxiliaires (19) dans la liste selon un ordre décroissant de ladite valeur du rendement général (Gm) ; et
choix d'un mode de fonctionnement du véhicule (10) sur la base de ladite valeur du rendement général (Gm).

**3.** Procédé de commande selon la revendication 2, *caractérisé en outre par les étapes* de :

calcul de la capacité totale résiduelle (CRC) du véhicule en tant que somme de la capacité (Cb) du dispositif principal (20) de stockage de l'énergie électrique et de la capacité résiduelle estimée (Cm) de chaque module d'alimentation auxiliaire (19), sur la base de la formule :

$$CRC = Cb + \Sigma(Cm-(f \times Am) \times Em)$$

où

CRC = capacité résiduelle du véhicule ;
Cm, Am, Em ont la signification précédemment indiquée ; et
f = nombre estimé de démarrages de chaque module d'alimentation auxiliaire (19) pendant un usage spécifique.

**4.** Dispositif apte à une commande adaptative d'un véhicule électrique (10) comprenant:

- au moins une roue d'entraînement (12) pourvue d'un moteur électrique (21) ;
- un module de commande principal (18) comprenant un dispositif principal (20) de stockage de l'énergie électrique pouvant être opérationnellement raccordé au moteur électrique (21) de la roue d'entraînement (12), et une première unité de commande logique (23) conformée et programmée pour commander sélectivement différents modes de fonctionnement du véhicule (10) et pour détecter un état de charge résiduelle (Cb) du dispositif principal (20) de stockage de l'énergie électrique ; et
- au moins un module d'alimentation auxiliaire (19)

*caractérisé en ce que*
le module d'alimentation auxiliaire (19) comprend au moins une source d'énergie auxiliaire (24) choisie parmi dispositifs de stockage d'énergie auxiliaire et dispositifs de génération d'énergie auxiliaire, et une deuxième unité de commande (25) reliée à la première unité de commande (23) par une ligne de communication (27) à bus CAN ;

- lesdites première et deuxième unités de commande (23, 25) étant conformées et programmées pour recevoir et transmettre des données de commande via ladite ligne de communication (27) à bus CAN,
- la deuxième unité de commande (25) est conformée et programmée pour détecter, à un moment donné, les données d'efficacité (Cm, Am, Em, Dm) de la source d'énergie auxiliaire (24), comprenant :

Cm (Wh) = énergie résiduelle de la source d'énergie auxiliaire (24) ;
Am (Wh) = absorption d'énergie maximale, au démarrage, de la source d'énergie auxiliaire (24) ; et
Em (%) = rendement réel d'utilisation, au moment détecté, de la source d'énergie auxiliaire (24) ;
Dm = vecteur indicatif de paramètres dynamiques concernant l'adsorption maximale du courant entrée/ sortie et régiment lent, pendant des états transitoires de transfert de puissance du module d'alimentation auxiliaire ;
lesdites première et deuxième unités de commande (23, 25) étant en outre programmées pour :

- communiquer les données de rendement détectées (Cm, Am, Em, Dm) du module d'alimentation auxiliaire (19) à la première unité de commande (23) via une ligne de communication (27) à protocole par bus CAN ;
- déterminer une valeur du rendement général (Gm) de la source d'énergie auxiliaire (24) par ladite première unité de commande (23) et prendre en compte lesdites données de rendement (Cm, Am, Em, Dm) reçues dudit module d'alimentation auxiliaire (19) ; et
- activer, par ladite première unité de commande (23), un mode de fonctionnement du véhicule (10) choisi entre un mode charge maximale du dispositif principal (20) de stockage de l'énergie, et un mode rendement maximal de la source (24) d'énergie auxiliaire,

dans lequel, dans ledit mode charge maximale, ladite première unité de commande (23) active ledit module d'alimentation auxiliaire (19) en fonction de la capacité (Cb) dudit dispositif principal de stockage d'énergie (20) et en relation avec la valeur du rendement général déterminée (Gm) de la source (24) d'énergie auxiliaire, et des besoins d'entraînement du véhicule (10), de manière à permettre la charge du dispositif principal (20) de stockage de l'énergie à la valeur ou capacité de tension maximale, et

dans lequel, dans ledit mode rendement maximal, au moins un module d'alimentation auxiliaire (19) est activé, selon un ordre défini par la valeur du rendement général (Gm), chaque fois que le véhicule réclame plus, ou moins, de puissance, pour compenser la capacité réduite (Cb) dudit dispositif principal de stockage d'énergie (20).

5. Dispositif selon la revendication 4, *caractérisé en ce qu'il* comprend une pluralité de modules (19) d'alimentation auxiliaire munis de sources d'alimentation auxiliaire de type identique et/ou différent.

6. Dispositif selon la revendication 4, *caractérisé en ce que* l'unité de commande logique (25) du module (19) d'alimentation auxiliaire est conformée et programmée pour détecter les paramètres de rendement spécifiques (Cm, Am, Em, Dm) du module d'alimentation auxiliaire (19).

7. Dispositif selon la revendication 5, *caractérisé en ce que* l'unité de commande logique (23) du module de commande principal (18) du véhicule (10) est conformée et programmée pour fournir une liste de rendement des modules (19) d'alimentation auxiliaire, en fonction des paramètres de rendement spécifique (Cm, Am, Em, Dm) fournis par les unités de commande (25) des modules (19) d'alimentation auxiliaire.

8. Dispositif selon la revendication 4, *caractérisé en ce que* chaque module (19) d'alimentation auxiliaire est fixé de manière amovible à un châssis (10') du véhicule (10).

Fig. 1

Fig. 2

Fig. 3

Fig. 4

Fig. 5

Fig. 6

Fig. 7

START

S7 | Read charge state of battery [Cb]

S8 | Telemetry data C.A.E.D. from module/s 19

S9 | Read comands from driver

Processing

S10

S10.1 | [Cb]
[C.A.E.D.] M1
[C.A.E.D.] Mn

S10.2 | Max charge method

Max efficiency method | S10.3

S11 | Send ON control to actuate module/s

S12 | Residual capacity of module/s is greater than the declared one ? | NO

YES

S13 | Disconnect the module/s and inform about malfunctioning

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0027662 A
- WO 0179012 A
- JP 11341606 A

- EP 1745967 A
- US 5065086 A

**Non-patent literature cited in the description**

- **J.P. CUN ; J.N. FIORINA ; M. FRAISSE ; H. MAB-BOUX.** The experience of an ups company in advanced battery monitoring. Telecommunications Energy Conference, 1996. *INTELEC '96., 18th International,* October 1996, 646-653